# EUROPEAN PATENT APPLICATION

(11) **EP 4 621 352 A1**
(43) Date of publication of application: **24.09.2025**
(21) Application number: 22965705.1
(22) Date of filing: 14.11.2022
(51) Int. Cl.: G01C 21/26

(54) **INFORMATION PROCESSING APPARATUS, CONTROL METHOD, PROGRAM, AND STORAGE MEDIUM**

(71) Applicant: Pioneer Corporation, Tokyo 113-0021 (JP)
(72) Inventor: OIKAWA, Tomohisa, Kawagoe-shi, Saitama 350-8555 (JP)
(74) Representative: Viering, Jentschura & Partner mbB Patent- und Rechtsanwälte
(86) International application number: PCT/JP2022/042220
(87) International publication number: WO 2024/105728

(57) **Abstract**

The mobile terminal 1 or the server device 6 includes an acquisition unit, a determination unit, and a display control unit. The acquisition unit acquires a designated spot. The determination unit determines an alternative spot which is equivalent or similar in attribute to the designated spot. The display control unit cause the display unit 16 to display a map with indication of an isogram of an indicator, the designated spot, and/or the alternative spot, wherein the indicator is based on at least one of a required time of arrival, a travelling direction, and/or a traffic cost on an assumption that a reference point is set as a point of departure.

## Description

### TECHNICAL FIELD

The present disclosure relates to a presentation of information regarding a spot.

### BACKGROUND

Conventionally, there is known a technique for presenting alternative facilities. For example, Patent Literature 1 discloses a navigation device configured to, upon determining that the weather and environment of a destination at an expected arrival time and its degree based on weather environment information around the destination meet the avoidance condition, search for an alternative facility similar to the original destination without the influence and propose the alternative facility based on the search result.

### PRIOR ART DOCUMENTS

### PATENT LITERATURE

Patent Literature 1: JP 2013-205156A

### SUMMARY

### PROBLEM TO BE SOLVED BY THE INVENTION

According to the technique described in Patent Literature 1, it proposes an alternative facility when the weather and environment of the original destination was determined to be bad enough to avoid the destination. However, the facility presented as an alternative in that case may be more difficult to visit than the original destination for some reasons, for example, the alternative is farther than the original destination.

The present disclosure has been made in order to solve the above issue, and it is an object of the present invention to provide an information processing device capable of suitably present information regarding an appropriate spot for visit.

### MEANS FOR SOLVING THE PROBLEM

One invention is an information processing device including:
an acquisition unit configured to acquire a first spot;
a determination unit configured to determine a second spot which is equivalent or similar in attribute to the first spot; and
a display control unit configured to display, on a display device, a map with an indication of
   an isogram of an indicator based on at least one of a required time of arrival, a travelling distance, and/or a traffic cost on an assumption that a point of departure is set as a reference point,
   the first spot, and
   the second spot.

Another invention is a control method executed by a computer, the control method including:
an acquisition process to acquire a first spot;
a determination process to determine a second spot which is equivalent or similar in attribute to the first spot; and
a display control process to display, on a display device, a map with an indication of
   an isogram of an indicator based on at least one of a required time of arrival, a travelling distance, and/or a traffic cost on an assumption that a point of departure is set as a reference point,
   the first spot, and
   the second spot.

Still another invention is a program causing a computer to:
an acquisition unit configured to acquire a first spot;
a determination unit configured to determine a second spot which is equivalent or similar in attribute to the first spot; and
a display control unit configured to display, on a display device, a map with an indication of
   an isogram of an indicator based on at least one of a required time of arrival, a travelling distance, and/or a traffic cost on an assumption that a point of departure is set as a reference point,
   the first spot, and
   the second spot.

### BRIEF DESCRIPTION OF THE DRAWINGS

[FIG. 1] It illustrates a configuration example of a navigation system according to an embodiment.
[FIG. 2] It illustrates an example of a schematic configuration of a mobile terminal.
[FIG. 3] It illustrates a navigation screen image showing the route from the current position to the destination.
[FIG. 4] It is a first display example of the display screen image regarding the alternative spot.
[FIG. 5] It is a second display example of the display screen image regarding the alternative spot.
[FIG. 6] It is a third display example of the display screen image regarding the alternative spot.
[FIG. 7] It is an example of a flowchart showing a procedure of the process performed by the mobile terminal.
[FIG. 8] It illustrates a configuration example of a navigation system according to a modification.
[FIG. 9] It illustrates an example of the schematic configuration of a server device.

### DETAILED DESCRIPTION OF PREFERRED EMBODIMENTS

According to a preferred embodiment of the present invention, there is provided an information processing device including: an acquisition unit configured to acquire a first spot; a determination unit configured to determine a second spot which is equivalent or similar in attribute to the first spot; and a display control unit configured to display, on a display device, a map with an indication of an isogram of an indicator based on at least one of a required time of arrival, a travelling distance, and/or a traffic cost on an assumption that a point of departure is set as a reference point, the first spot, and the second spot.

The information processing device displays an isogram of an indicator based on at least one of a required time of arrival, a travel distance, and a traffic cost on a map indicating the first spot and the second spot. Thus, the information processing device suitably visualizes the values of the indicator with respect to the first spot and the second spot and suitably displays the first spot and the second spot in a comparable manner.

In one aspect of the information processing device, the determination unit is configured to determine the second spot based on at least one of indicators which are the required time of arrival, the travelling distance, and the traffic cost from the reference point, wherein the display control unit is configured to display, on the display unit, the isogram based on an indicator other than the at least one indicator. According to this aspect the information processing device can display the first spot and the second spot in a way the user can compare from various perspectives.

In another aspect of the information processing device, the isogram includes plural lines corresponding to plural values of the indicator, wherein the display control unit is configured to switch displaying each of the plural lines in order. According to this aspect, the information processing device can suitably allow the user to visually recognize the isogram.

**In** another aspect of the information processing device, the display control unit is configured to display the isogram corresponding to at least two indicators selected from the required time of arrival, the travelling distance, and the traffic cost, wherein the display control unit is configured to simultaneously display the isogram corresponding to the at least two indicators in a state where the at least two indicators are identifiable, respectively. According to this aspect, the information processing device can suitably allow the user to visually recognize the isogram corresponding to plural indicators.

In another aspect of the information processing device, the display control unit is configured to display the isograms corresponding to at least two indicators selected from the required time of arrival, the travelling distance, and the traffic cost, wherein the display control unit is configured to switch displaying each of the isograms corresponding to the at least two indicators in order. According to even this mode, the information processing device can suitably allow the user to visually recognize the isogram corresponding to plural indicators.

In another aspect of the information processing device, the information processing device further includes a designation unit configured to receive an input for designating at least one of the required time of arrival, the travelling distance, and/or the traffic cost as the indicator used for displaying the isogram. In this manner, the information processing device can display on a map the isogram based on the designated indicator together with the first spot and the second spot.

In another aspect of the information processing device, the display control unit is configured to display information on respective reviews of the first spot and the second spot on the map. According to this aspect, the information processing device can cause the user to suitably recognize the review to each spot useful when comparing the first spot and the second spot.

In another preferred embodiment of the present invention, there is provided a control method executed by a computer, including: an acquisition process to acquire a first spot; a determination process to determine a second spot which is equivalent or similar in attribute to the first spot; and a display control process to display, on a display device, a map with an indication of an isogram of an indicator based on at least one of a required time of arrival, a travelling distance, and/or a traffic cost on an assumption that a point of departure is set as a reference point, the first spot, and the second spot. By executing the control method, the computer can suitably display the first spot and the second spot in a comparable manner.

In yet another embodiment of the present invention, there is provided a program causing a computer to function as: an acquisition unit configured to acquire a first spot; a determination unit configured to determine a second spot which is equivalent or similar in attribute to the first spot; and a display control unit configured to display, on a display device, a map with an indication of an isogram of an indicator based on at least one of a required time of arrival, a travelling distance, and/or a traffic cost on an assumption that a point of departure is set as a reference point, the first spot, and the second spot. By executing the program, the computer can suitably display the first spot and the second spot in a comparable manner. In some embodiments, the program is stored in a storage medium.

### EMBODIMENTS

Hereinafter, preferred embodiments of the present invention are described below with reference to drawings.

### (1) System Configuration

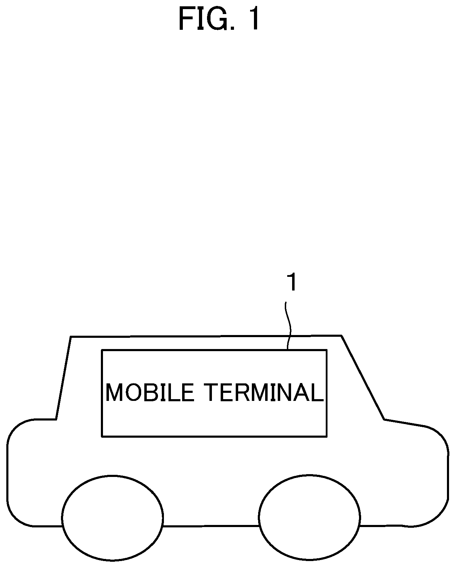

FIG. 1 shows a configuration example of a navigation system according to the embodiment. The navigation system includes a mobile terminal 1 that provides guidance regarding a spot designated by a user and a spot related thereto and moves together with a vehicle (also referred to as "target vehicle") on which the user rides. Here, "spot" refers to an arbitrary place which can be set as a destination, and may be an arbitrary facility or a place such as a tourist spot.

The mobile terminal 1 moves together with the target vehicle to provide a user who rides on the target vehicle with route guidance information regarding a spot designated by the user and other information. In the present embodiment, the mobile terminal 1 searches for one or a plurality of spots (also referred to as "alternative spots") serving as alternative options for the spot (also referred to as "designated spot") designated by a user, and displays the designated spot and the alternative spots on the map. In this case, as will be described later, the mobile terminal 1 searches for one or more spots which have a similar or the same attribute to or as the designated spot and which are equivalent or superior to the designated spot in terms of a predetermined index and sets the one or more spots as alternative spots. The designated spot is an example of the "first spot" and the alternative spot is an example of the "second spot".

The mobile terminal 1 may be a navigation device that is installed in the target vehicle and conducts route guidance to the destination, or may be a portable terminal such as a smartphone usable by the user. Further, the mobile terminal 1 may be incorporated into the target vehicle. The mobile terminal 1 is an example of an "information processing device" and the target vehicle or the user is an example of a "moving body".

### (2) Equipment Configuration

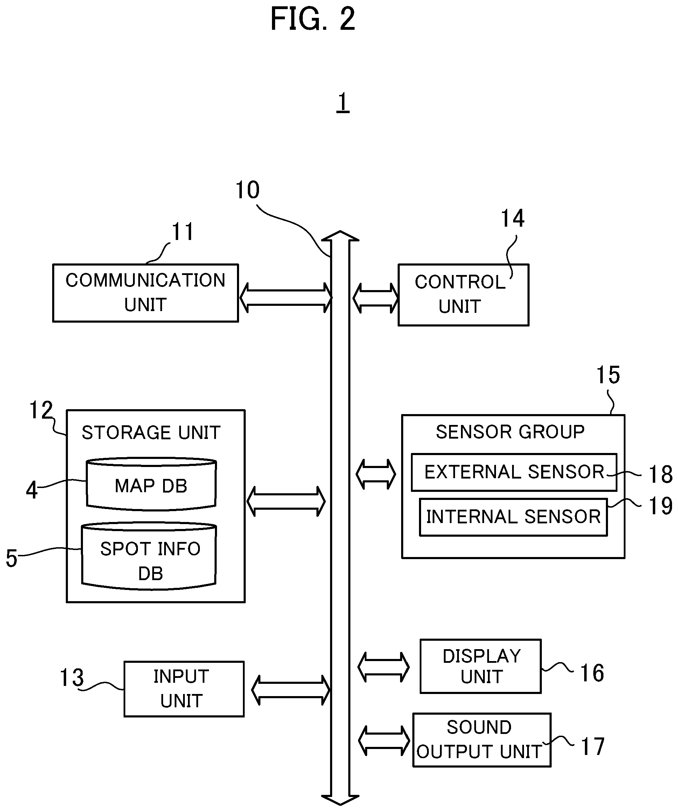

FIG. 2 shows an example of a schematic configuration of the mobile terminal 1. The mobile terminal 1 mainly includes a communication unit 11, a storage unit 12, an input unit 13, a control unit 14, a sensor group 15, a display unit 16, and a sound output unit 17. Each element in the mobile terminal 1 is connected to each other through a bus line 10.

The communication unit 11 performs data communication with other terminals under the control of the control unit 14. In some embodiments, the communication unit 11 may receive map data for updating the map DB (DataBase) 4 from a map management server (not shown).

The storage unit 12 consists of various memories such as a RAM (Random Access Memory), a ROM (Read Only Memory), a non-volatile memory (including a hard disk drive, a flash memory, and the like). The storage unit 12 stores a program for the mobile terminal 1 to execute a predetermined process. The storage unit 12 is used as a work memory of the control unit 14. The program executed by the mobile terminal 1 may be stored in a storage medium other than the storage unit 12.

The storage unit 12 stores the map DB (DataBase) 4 and the spot information DB 5. The map DB 4 contains a variety of records required for route setting.

The map DB 4 is required for displaying a map with reference to a predetermined position such as the present position of the target vehicle. The map DB 4 includes, for example, road data in which a road network is represented by a combination of nodes and links. Link data for each link includes attribute information on the road corresponding to the each link. In the present embodiment, the link data includes energy cost information regarding energy cost (fuel cost in the case of a fuel-powered vehicle, and electricity cost in the case of an electric vehicle) required to pass through the road corresponding to the each link. The energy cost information may be information indicating the energy cost for each vehicle type (e.g., classification based on the displacement and/or electric power). In the map DB 4, toll information is also associated with each link corresponding to toll roads.

The spot information DB 5 is a database of spots that are options to be set as destinations. The spot information DB 5 includes a record representing information for each spot, and each record includes information on the spot name, the type (category), and the evaluation based on word-of-mouth regarding a spot. The map DB 4 and the spot information DB 5 may be updated under the control of the control unit 14 based on information that the communication unit 11 receives from the map management server (not shown).

The input unit 13 is one or more user interfaces that accept user input, and examples of the input unit 13 include a button, a touch panel, a remote controller, and a voice input device. The display unit 16 displays information under the control of the control unit 14. Examples of displays 16 include a display and a projector. The sound output unit 17 outputs voice or sound under the control of the control unit 14. Examples of the sound output unit 17 includes a speaker. The display unit 16 and the sound output unit 17 is an example of the "presentation unit".

The sensor group 15 includes sensors that perform sensing regarding the condition of the target vehicle or the environment outside the vehicle. The sensor group 15 includes external sensors 18, internal sensors 19. The external sensors 18 are one or more sensors for recognizing the surrounding environment of the target vehicle and examples thereof include a lidar, a radar, an ultrasonic sensor, an infrared sensor, and a sonar. The internal sensors 19 are one or more sensors for positioning the target vehicle, and examples thereof include a GNSS (Global Navigation Satellite System), a receiver, a gyroscope sensor, an IMU (Inertial Measurement Unit), and a vehicle speed sensor. The sensor group 15 may include sensors such that the control unit 14 can derive the position of the target vehicle directly or indirectly (i.e., by performing estimation processing) from the output from the sensor group 15.

The control unit 14 includes a CPU (Central Processing Unit) and a GPU (Graphics Processing Unit) and controls the entire mobile terminal 1. The control unit 14 functions as a "specification unit", "search unit", "designation unit", "presentation control unit" and a computer to execute the program. The control unit 14 also functions as an "acquisition unit", "determination unit", "designation unit", "display control unit" and a computer to execute the program.

The process performed by the control unit 14 is not necessarily realized by software based on a program, and may be realized by any combination of hardware, firmware, and software. The control unit 14 may be implemented using a user-programmable integrated circuit such as a FPGA (Field-Programmable Gate Array) and a microcomputer and a program to be executed in this embodiment may be realized by the integrated circuit.

The configuration of the mobile terminal 1 shown in FIG. 2 is an example, and various changes may be made to the configuration shown in FIG. 2. For example, instead of storing the map DB 4 and the spot information DB 5 in the storage unit 12, the control unit 14 may receive information corresponding to the map DB 4 and the spot information DB 5 from the map management server (not shown) through the communication unit 11. In another example, at least one of the input unit 13, the display unit 16, and the sound output unit 17 may be provided in the target vehicle as an external device of the mobile terminal 1 and may supply the generated signal to the mobile terminal 1. The at least some sensors of the sensor group 15 may be sensors mounted on the target vehicle. In this instance, the mobile terminal 1 may acquire, from the target vehicle, the data outputted by the sensors mounted on the target vehicle based on a communication protocol such as a CAN (Controller Area Network).

### (3) Search for Alternative Spots

Next, a method of searching for an alternative spot will be specifically described.

First, the control unit 14 determines, based on the input from the user, an indicator (also referred to as "reference indicator") used as a reference in searching for the alternative spots. In this case, the control unit 14 receives the input for selecting a reference indicator from options "required time of arrival", "travelling distance", and "traffic cost" by the input unit 13, and then sets the selected option, which is one of "required time of arrival", "travelling distance", or "traffic cost", by the input as the reference indicator. Here, the indicator "required time of arrival" indicates the time required for the target vehicle to move from the point of departure (the current position of the target vehicle in the present embodiment) to the spot, and the indicator "travelling distance" indicates the travelling distance required for the target vehicle to move from the point of departure to the spot. The indicator "traffic cost" refers to the cost required for the target vehicle to arrive at the spot, and includes the energy cost required for the target vehicle to arrive at the spot in addition to the charge (toll) required for the passage of toll roads when the route to the spot includes the toll roads. The point of departure is an example of the "reference point".

Next, the control unit 14 calculates a value (also referred to as "first reference indicator value") of the reference indicator on the assumption that the current position is set as the point of departure and the designated spot is set as the destination, i.e., calculates the first reference indicator value for movement from point of departure to the designated spot. Then, the control unit 14 identifies an area (also referred to as "alternative search area") representing a range of the destination having a reference indicator value equal to or superior to the first reference indicator value on the assumption that the current position is set as the point of departure. In this case, the alternative search area is an area representing the range of the destination where the required time of arrival or the travelling distance is the same as or shorter than that when the designated spot is set as the destination, or an area representing the range of the destination where the traffic cost is the same as or lower than that when the designated spot is set as the destination.

In this case, for example, if the reference indicator is the required time of arrival, the control unit 14 identifies points on the road network where the required time of arrival becomes the first reference indicator value as the boundary points of the alternative search area, and then identifies the inside of the polygon having the identified points as vertices as the alternative search area. In this case, the control unit 14 may interpolate the polygon (i.e., the boundary line) to form the boundary of the alternative search area using any interpolation technique such as spline interpolation or smoothen the polygon to form the boundary of the alternative search area.

If the reference indicator is the travelling distance, the control unit 14 identifies the points on the road network where the travelling distance becomes the first reference indicator value as the boundary points of the alternative search area, and then identifies the inside of the polygon having the identified points as the vertices as the alternative search area. If the reference indicator is a traffic cost, the control unit 14 identifies points on the road network where the traffic cost becomes the first reference indicator value as boundary points of the alternative search area, and then identifies the inside of the polygon having the identified points as the vertices as an alternative search area.

After identifying the alternate search area, the control unit 14 searches for a spot, as an alternate spot, which is a spot registered in the spot information DB 5 and is present in the alternate search area and has a similar or same attribute to or as the designated spot. In this instance, the control unit 14 first extracts records corresponding to spots existing in the alternative search area from the spot information DB 5. Then, the control unit 14 refers to the information on the types (categories) of the spots included in the extracted records, and selects one or more spots which belong to either the type (category) of the designated spot or another type (category) predetermined as an alternative to the type (category) of the designated spot. Accordingly, the control unit 14 may select, as an alternative spot, a spot that is the same or similar in attribute as or to the designated spot and is equivalent or superior to the designated spot in terms of at least one of the required time of arrival, the travelling distance, and/or the traffic cost. Therefore, the control unit 14 can present an attractive spot that is comparable to the designated spot as an alternative spot to the user.

### (4) Display of Alternative Spots

Next, a description will be given of the display processing relating to the alternative spot by the control unit 14. In summary, upon a request for displaying an alternative spot, the control unit 14 accepts an input for selecting the reference indicator, and displays the designated spot and the alternative spot on the map with indication of the contour lines according to the selected reference indicator. Thus, it becomes possible to suitably visualize values of the reference indicator selected by the user together with the position of the alternative spot.

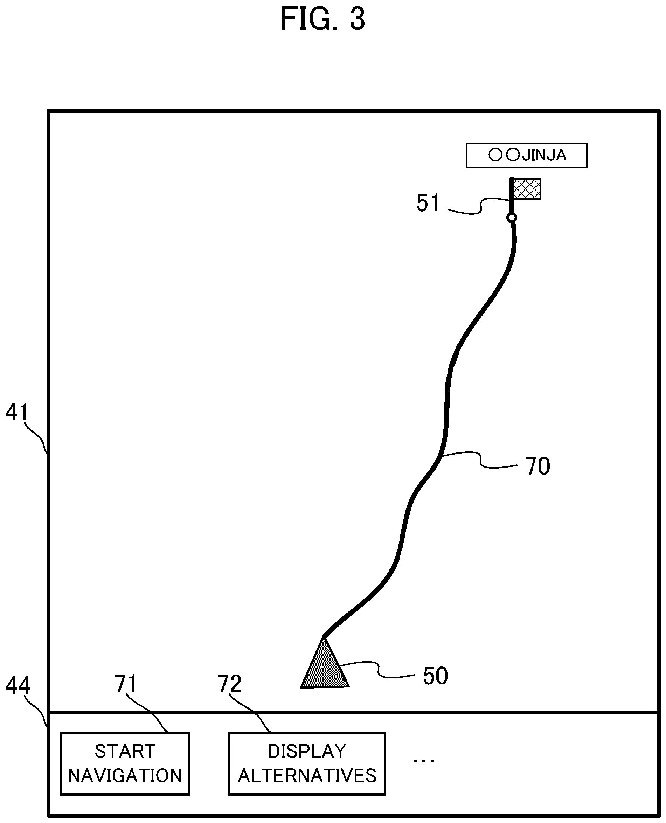

FIG. 3 is a navigation screen image showing the route from the current position to the destination. The control unit 14 generates a display signal of the navigation screen image, and supplies the generated display signal to the display unit 16 to display the navigation screen image on the display unit 16. The navigation screen image, a map display field 41 for displaying the map, and a button display field 44 for displaying the user selectable buttons are provided.

Here, since "○○ jinja" is designated as a destination, the control unit 14 performs a route search from the position of the target vehicle to the destination, and displays the route search result on the map display unit 41. Specifically, the control unit 14 displays the route line 70 indicating the searched route on the map together with the current position mark 50 indicating the current position of the target vehicle and the destination mark 51 indicating the destination.

In the button display field 44, a navigation start button 71 and an alternative spot display button 72 are provided. Upon detecting the selection of the navigation start button 71, the control unit 14 starts navigating the target vehicle to move along the route indicated by the route line 70 in the map display field 41. On the other hand, upon detecting that the alternative spot display button 72 is selected, the control unit 14 uses "○○ jinja", which is set as the destination, as a designated spot and executes processing related to search and display of the alternative spots.

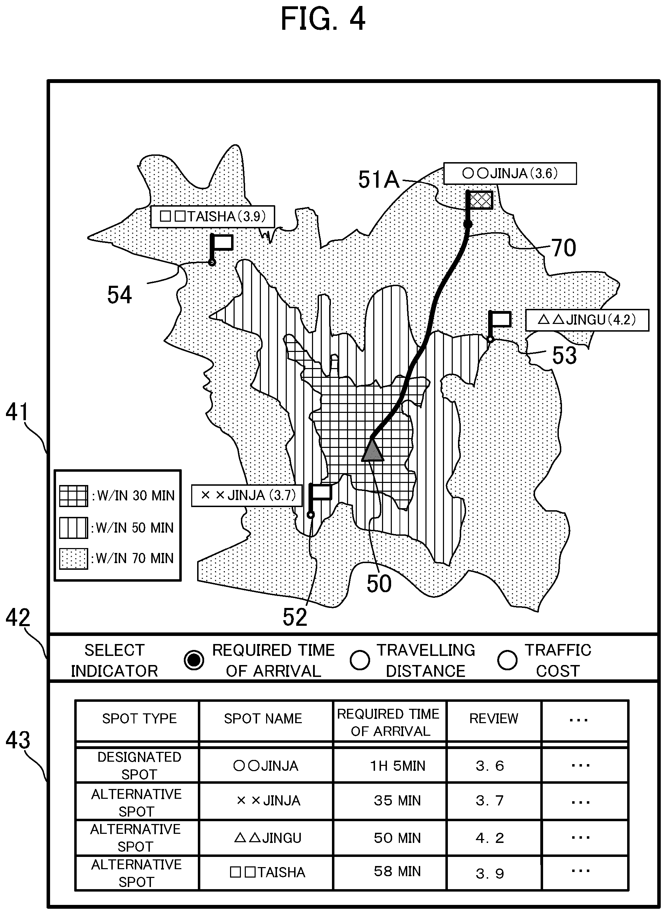

FIG. 4 is a first display example of a display screen image regarding alternative spots. The control unit 14 detects that the alternative spot display button 72 is selected in the navigation screen image shown in FIG. 3, and then searches for the alternative spots using the required time of arrival as the reference indicator, and displays the search result of the alternative spots. Here, the control unit 14 provides, on the display screen image, a map display field 41, a reference indicator selection field 42, and a spot list display field 43.

The control unit 14 displays, on the map display field 41, the map with indication of a designated spot mark 51A of the "∘∘ jinja" as the designated spot and alternative spot marks 52 to 54 of three alternative spots "× × jinja", "△△ jingu", "□□ taisha" for the designated spot. In this instance, the control unit 14 explicitly indicates numerical values of the reviews based on the word-of-mouth included in the records of respective alternative spots of the spot information DB 5, together with the spot names of the alternative spots. Here, the index of the review that the ranges from 0 to 5 is used.

Furthermore, the control unit 14 displays, over the map, an isogram (contour lines) based on the indicator "required time of arrival", which is the reference indicator selected in the reference indicator selection field 42. In this case, the control unit 14 displays color-coded areas divided by isogram. The control unit 14 herein draws, as the isogram, a line indicating positions where the reference indicator "required time of arrival" is 30 minutes, a line indicating positions where the reference indicator "required time of arrival" is 50 minutes, and a line indicating the reference indicator "required time of arrival" is 70 minutes. Thus, the control unit 14 can suitably visualize the distribution of values of the reference indicator on the map, together with each position of the designated spot and the alternative spots.

Here, a supplementary description will be given of the display of the isogram. For example, the control unit 14 determines respective lines, to be displayed as the isogram, in the same manner as the method of determining the boundary of the alternative search area. Specifically, the control unit 14 identifies points, on the road network, reachable at the value of the reference indicator corresponding to each line of the isogram, as points at which each line passes, and then identifies the inside of the polygon having the identified points as vertices of the alternative search area. In this case, the control unit 14 may perform interpolation to form the isogram using an arbitrary interpolation technique such as spline interpolation, or smooth the lines of the isogram.

The number of lines of the isogram is not limited to three, but may be any number. Further, the control unit 14 may determine, based on the value of the first reference indicator, respective values corresponding to the lines of the isogram. For example, the control unit 14 provides the outmost line of the isogram indicating the value (herein, seventy minutes) close to the first reference indicator value, and provides a predetermined number of lines of the isogram inside the outmost line based on a predetermined rule.

Further, instead of displaying plural lines of the isogram corresponding to different required times of arrival at the same time as shown in FIG. 4, the control unit 14 may individually display each of the lines corresponding to the different required times in order by animation. In this case, for example, the mobile terminal 1 firstly displays the line corresponding to 30 minutes of the required time of arrival for a predetermined time, then displays the line corresponding to 50 minutes of the required time of arrival for a predetermined time, and finally the line corresponding to 70 minutes of the required time of arrival for a predetermined time. The mobile terminal 1 repeatedly executes this display cycle.

In the reference indicator selection field 42, the control unit 14 displays a user interface for receiving an input to select one of "required time of arrival", "travelling distance", and "traffic cost". Here, as an example, the control unit 14 displays a radio button for selecting one of the indicators "required time of arrival", "travelling distance", "traffic cost", and the indicator "required time of arrival" is selected in FIG. 4. In some embodiments, upon detecting the selection of one of the indicators on the reference indicator selection field 42, the control unit 14 displays the isogram and alternative spots on the map display field 41. In another example, the control unit 14 determines that one of the indicators "required time of arrival", "travelling distance", and "traffic cost" is already selected in the default state, and displays the isogram and alternative spots on the map display field 41 even before receiving a user input on the reference indicator selection field 42.

The control unit 14 displays a list of designated spot and alternative spots in the spot list display field 43. This list shows each item of "spot type", "spot name", "required time of arrival", and "review" for each spot. Here, the control unit 14 refers to the records of the spot information DB 5 corresponding to the designated spot and the alternative spots, and displays the above-described list. The item "spot type" herein is information indicating whether each spot is a designated spot or an alternative spot. The item "spot name" herein indicates the name of each spot. The item "required time of arrival" represents a reference indicator and the required time to travel from the current position to each spot. The item "review" represents the review (evaluation) for each spot registered in the spot information DB 5. In addition, the control unit 14 displays the designated spot at the top of the list, and arranges the alternative spots in ascending order (i.e., in order of excellence) of the required time of arrival which is a reference indicator.

Thus, the control unit 14 displays the list of the designated spot and the alternative spots together with the value of the reference indicator and the reviews, so that the designated spot and the alternative spots can be presented to the user in a readily comparable manner.

Further, upon detecting user's selection of a particular alternative spot through a click operation or the like in the map display field 41 or spot list display field 43, the control unit 14 determines that the selected alternative spot is the destination, and starts the route navigation to the selected alternative spot.

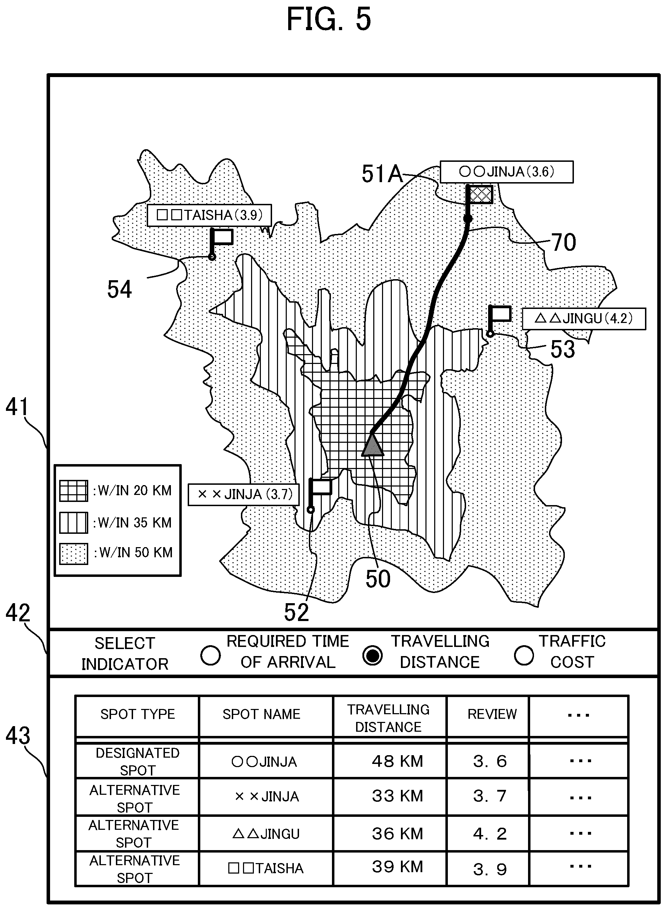

FIG. 5 is a second display example of the display screen image regarding alternative spots. Since the control unit 14 detects the selection of "travelling distance" in the reference indicator selection field 42, it searches for the alternative spots using the travelling distance as a reference indicator, and displays the search result of the alternative spots.

Specifically, the control unit 14 displays, on the map display field 41, the map with indication of a designated spot mark 51A of the spot "○○ jinja" as the designated spot and alternative spot marks 52 to 54 of three alternative spots "× × jinja", "△△ jingu", "□□ taisha" for the designated spot. It is noted that these alternative spots are the same as the alternative spots when the reference indicator is set as "required time of arrival" in the first display example. Furthermore, the control unit 14 displays, over the map, an isogram according to the indicator "travelling distance" which is the reference indicator selected in the reference indicator selection field 42. Then, the control unit 14 displays color-coded areas divided by isogram. The control unit 14 herein draws, as the isogram, a line indicating positions where the reference indicator "travelling distance" is 20 km, a line indicating positions where the reference indicator "travelling distance" is 35 km, and a line indicating the reference indicator "travelling distance" is 50 km.

Thus, the control unit 14 can suitably visualize the distribution of values of the reference indicator on the map, together with each position of the designated spot and the alternative spots even when "travelling distance" is selected as the reference indicator. The control unit 14 may individually display each of the lines corresponding to the different travelling distances in order by animation.

The control unit 14 displays a list of designated spot and alternative spots regarding each item of "spot type", "spot name", "travelling distance", and "review", in the spot list display field 43. In the spot list display field 43, a list of designated spot and alternative spots having items including the item "travelling distance" as a reference indicator is displayed. By displaying the above-described list, the control unit 14 can present the designated spot and the alternative spots to the user in an easily comparable manner.

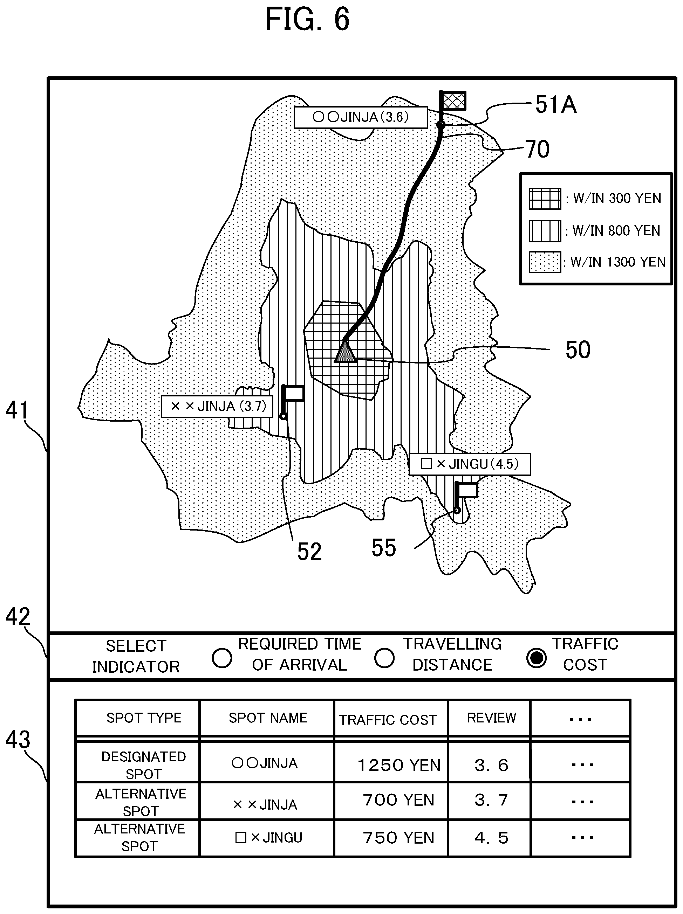

FIG. 6 is a third display example of a display screen image regarding alternative spots. Since the control unit 14 detects the selection of the indicator "traffic cost" in the reference indicator selection field 42, it searches for the alternative spots using the traffic cost as a reference indicator, and displays the search result of the alternative spots.

Specifically, the control unit 14 displays, on the map display field 41, the map with indication of a designated spot mark 51A of the spot "○○ jinja" as the designated spot and alternative spot marks 52 and 55 of two alternative spots "×× jinja" and "□× jingu" for the designated spot. The spots "△△ Shingu" and "□□ Taisha", which were alternative spots when the reference indicator was set to "required time of arrival" or "travelling distance", are not alternative spots because the values of the reference indicator of the spots are worse than the first reference indicator value. Instead, "□×Shingu" is set as an alternative spot.

The control unit 14 displays, over the map, the isogram based on the "traffic cost" which is a reference indicator selected in the reference indicator selection field 42. Then, the control unit 14 displays color-coded areas divided by isogram. The control unit 14 herein draws, as the isogram, a line indicating positions where the reference indicator "traffic cost" is 300 yen, a line indicating positions where the reference indicator "traffic cost" is 800 yen, and a line indicating the reference indicator "traffic cost" is 1300 yen. Thus, even when "traffic cost" is selected as the reference indicator, the control unit 14 can suitably visualize the distribution of the values of the reference indicator on the map, together with the respective positions of the designated spot and the alternative spots. The control unit 14 may individually display each of the lines corresponding to the different traffic costs in order by animation.

Further, the control unit 14 displays a list of designated spot and alternative spots related to each item of "spot type", "spot name", "traffic cost", and "review" in the spot list display field 43. Thus, in the spot list display field 43, a list of the designated spot and alternative spots having items including the item "traffic cost" as a reference indicator is displayed. By displaying the above-described list, the control unit 14 can present the designated spot and the alternative spots to the user in an easily comparable manner.

### (5) Processing Flow

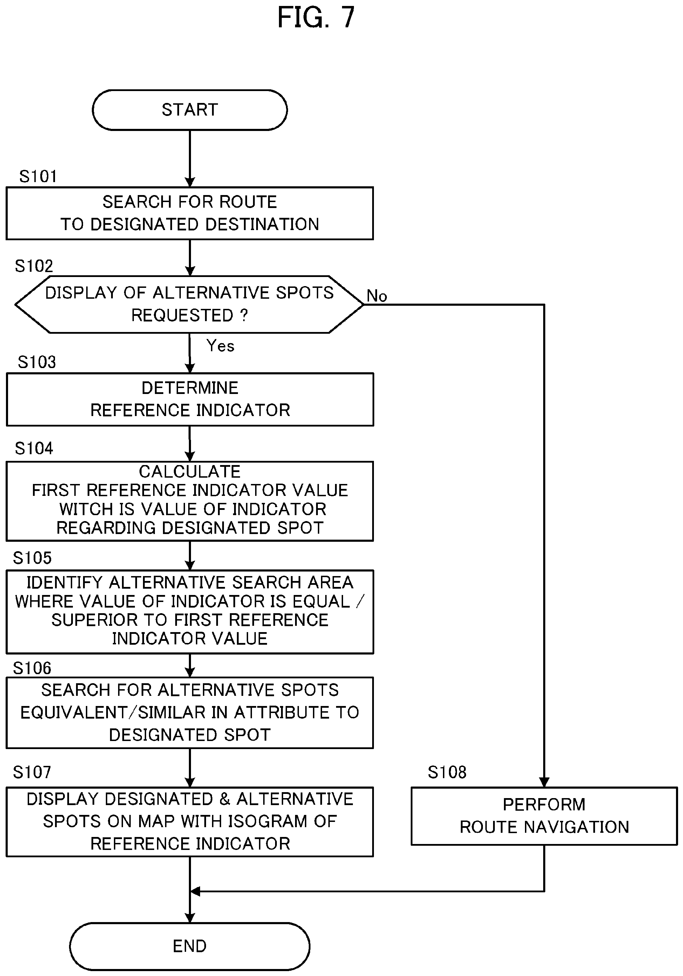

FIG. 7 is an example of a flowchart showing the procedure of the process executed by the control unit 14. The control unit 14 executes processing of the flowchart shown in FIG. 7, for example, upon receiving the designation of the destination.

First, the control unit 14 searches for a route from the present position to the designated destination (step S101). Then, the control unit 14 determines whether or not there is a request for displaying alternative spots (step S102). Then, upon determining that there is a request for displaying alternative spots (step S102; Yes), the control unit 14 proceeds with the process at step S103. On the other hand, upon determining that there is no request for displaying alternative spots (step S102; No), the control unit 14 executes the navigation of the route searched for at step S101 (step S108).

If there is a display request of the alternative spot, the control unit 14 determines a reference indicator (step S103). In this case, for example, upon receiving the user input specifying the reference indicator, the control unit 14 uses the indicator specified by the user input as a reference indicator. In another example, if the setting information which indicates that a specific indicator (required time of arrival, travelling distance, or traffic cost) should be set as the reference indicator is stored in advance in the storage unit 12 or the like, the control unit 14 determines the reference indicator based on the setting information.

Next, the control unit 14 calculates a first reference indicator value, which is the value of the reference indicator determined at step S103, of the designated spot (step S104). Then, the control unit 14 identifies the alternative search area where values of the reference indicator are equal to or superior to the first reference indicator value (step S105). Then, the control unit 14 refers to the spot information DB 5 and searches for alternative spots, in the alternative search area, having the same or similar attribute as or to the designated spot (step S106). In this case, for example, the control unit 14 selects a spot, in the alternative search area, which belongs to the type (category) in common with the designated spot as the alternative spot.

Then, the control unit 14 displays the designated spot and the alternative spots on the map together with the isogram according to the reference indicator (step S107). This allows the control unit 14 to suitably present the user with alternative spots that are alternatives to the designated spot in a manner comparable among the alternative spots and designated spot. In some embodiments, the control unit 14 may also display a list of alternative spots and designated spot. Upon detecting any of the alternative spots, the control unit 14 may start the route navigation using the selected alternative spot as the destination.

### (6) Modifications

Next, a description will be given of a preferred modifications to the embodiment described above. The following modifications may be applied to the above embodiment in combination.

### (First Modification)

At least some of the process which was performed by the mobile terminal 1 may be performed by a server device that performs data communication with the mobile terminal 1.

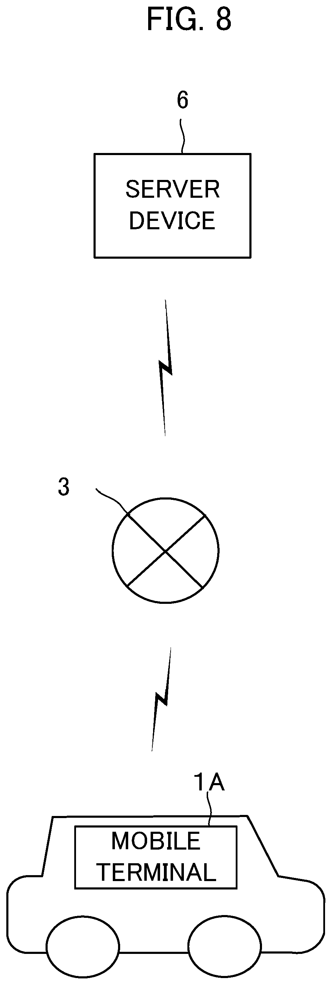

FIG. 8 shows a configuration example of a navigation system according to the first modification. The navigation system includes a mobile terminal 1A and a server device 6. The mobile terminal 1A and the server device 6 perform data communication with each other through the communication network 3.

The mobile terminal 1A has the same configuration as the mobile terminal 1 described in the above embodiment (see FIG. 2). If the process based on the map DB 4 and the spot information DB 5 is performed by the server device 6, the mobile terminal 1A may not store the map DB 4 and the spot information DB 5. The mobile terminal 1A transmits an upload signal including information output by the sensor group 15 and input information input by the input unit 13 to the server device 6.

The server device 6 generates output instruction data instructing display or voice output based on upload signals received from the mobile terminal 1A and transmits the generated output instruction data to the mobile terminal 1. For example, the server device 6 performs a process of the flowchart shown in FIG. 7 on the basis of an upload signal or the like received from the mobile terminal 1A.

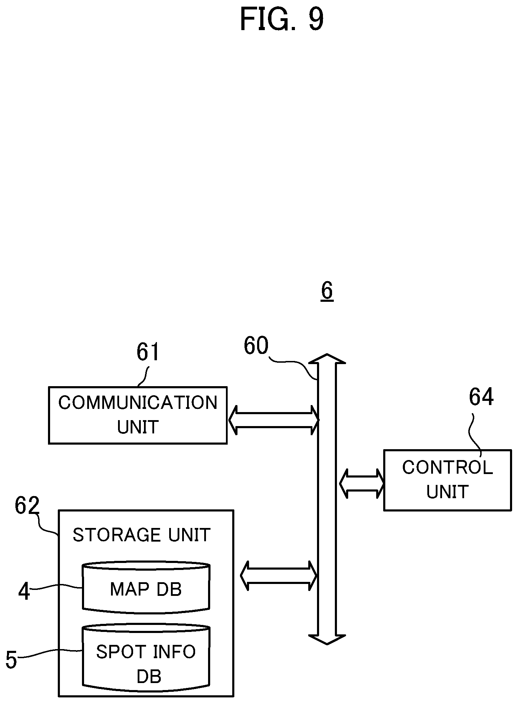

FIG. 9 shows an example of a schematic configuration of the server device 6. The server device 6 mainly includes a communication unit 61, a storage unit 62, and a control unit 64. Each element in the server device 6 is connected to one another via a bus line 60.

The communication unit 61 performs data communication with an external device such as a mobile terminal 1A under the control of the control unit 64. The storage unit 62 is configured by various memories such as a RAM, a ROM, a non-volatile memory (including a hard disk drive, a flash memory, etc.). The storage unit 62 stores a program for the server device 6 to executes a predetermined process. The storage unit 62 includes the map DB 4 and the spot information DB 5. The control unit 64 includes a CPU, a GPU or the like, and controls the entire server device 6. Further, the control unit 64 executes the program stored in the storage unit 62 and executes the process required for displaying the information related to the alternate spots on the mobile terminal 1A.

In this way, even when the server device 6 executes the processing necessary for displaying information related to the alternate spots, it is possible to provide the information about the alternate spots that is alternatives for the designated spot to the user, based on the information received from the server device 6, as in the embodiment. In this modification, the server device 6 is an example of the "information processing device".

### (Second Modification)

The control unit 14 may select two or more indicators from "required time of arrival", "travelling distance", and "traffic cost" as reference indicators.

In the first example, if three indicators of "required time of arrival", "travelling distance", and "traffic cost" are used as reference indicators, the control unit 14 identifies an alternative search area (referred to as "alternative search area AT") in the case where "required time of arrival" is used as a reference indicator, an alternative search area (referred to as "alternative search area AD") in the case where "travelling distance" is used as a reference indicator, and an alternative search area (referred to as "alternative search area AF") in the case where "traffic cost" is used as a reference indicator, respectively.

Then, for example, the control unit 14 determines a common area (i.e., AT ∩ AD ∩ AF) of the alternative search area AT, the alternative search area AD, and the alternative search area AF as the final alternative search area serving as a range for searching for alternative spots. Thus, the control unit 14 can search for only the alternative spots which are advantageous in terms of "required time of arrival", "travelling distance", and "traffic cost". If two indicators among "required time of arrival", "travelling distance", and "traffic cost" are selected as the reference indicators, the control unit 14 also determines the alternative search area to be the common area of the alternative search areas corresponding to the selected two reference indicators.

In the second example, the control unit 14 may determine an area (i.e., a AT ∪ AD ∪ AF) obtained by combining the alternative search area AT, the alternative search area AD, and the alternative search area AF as a final alternative search area serving as a range for searching for alternative spots. In this case, in some embodiments, if there are a plurality of alternative spots, the control unit 14 calculates scores (total scores) obtained by combining the three indicators of "required time of arrival", "travelling distance", and "traffic cost" for respective alternative spots. Then, the control unit 14 displays, in the spot list display field 43, the list of the alternative spots in descending order according to the total score (i.e., in descending ranking of the total score). In this way, the user can find an excellent alternative spot taking "required time of arrival", "travelling distance", and "traffic cost" into consideration comprehensively. In some embodiments, the total score may be a score obtained by normalizing values of three indicators "required time of arrival", "travelling distance", and "traffic cost" and summing normalized values of three indicators "required time of arrival", "travelling distance", and "traffic cost". Examples of normalization include weighting according to weights set by the user. The control unit 14 may display the list based on the total score in the same way as in the first example. Even when two of "required time of arrival", "travelling distance", and "traffic cost" are selected as reference indicators, the control unit 14 determines the alternative search area obtained by combining the alternative search areas corresponding to the two reference indicators.

In this modification, the control unit 14 may display, on the map, isograms according to respective reference indicators simultaneously, in a manner that associations between the isograms and the reference indicators are identifiable, respectively. For example, the control unit 14 simultaneously displays on the map the isograms based on respective reference indicators using different colors for the respective reference indicators. Thus, the control unit 14 can suitably recognize the isogram based on each reference indicator to the user.

In some embodiments, the control unit 14 may switch the display of the isograms based on the respective reference indicators over the map by animation, instead of displaying the isograms based on respective reference indicators on the map at the same time. In this case, the control unit 14 prevents the complicated display due to the simultaneous display of the isograms based on the respective reference indicators, while letting the user suitably recognize the isograms based on the respective reference indicators.

### (Third Modification)

If the control unit 14 searches for alternative spots based on a reference indicator, the control unit 14 may display an isogram based on an indicator other than the reference indicator.

For example, if alternative spots are searched for with reference to "required time of arrival" as a reference indicator, all of the alternative spots displayed on the map are equivalent to or superior to the designated spot in terms of "required time of arrival" and therefore already meet the condition on "required time of arrival". Taking the above into consideration, the control unit 14 displays over the map an isogram based on an indicator ("travelling distance" or "traffic cost") other than the reference indicator "required time of arrival", which is a condition already satisfied by the alternative spots. In this case, the user can select a desired alternative spot from alternative spots as a destination with reference to the indicator other than the reference indicator "required time of arrival".

### (Fourth Modification)

The controller 14 may output by audio information regarding alternative spots, instead of or in addition to displaying the alternative spots in such a manner shown in FIGS. 4 to 6. In this case, for example, the control unit 14 performs voice output by the sound output unit 17 to read out information corresponding to the list shown in the spot list display field 43 in FIGS. 4 to 6.

### (Fifth Modification)

The control unit 14 may use a spot designated by user input generated by the input unit 13 as a designated spot, instead of using the spot designated as the destination as the designated spot.

In this case, the control unit 14 considers the spot specified by the user by the input unit 13 as a designated spot, and then searches for and display alternative spots which are equivalent to or superior in the reference indicator to the reference indicator value. The control unit 14 may receive the user input designating the point of departure by the input unit 13 to calculate the first reference indicator value and identify the alternative search area using the point of departure designated by the user input. In this case, the designated point of departure is an example of the "reference point".

The control unit 14 receives the user input designating the departure time by the input unit 13 to calculate the value of the reference indicator based on the departure time designated by the user input. For example, if the indicator "required time of arrival" is set as the reference indicator, the control unit 14 acquires statistical information on the degree of traffic congestion of each road at the designated departure time from the storage unit 12 or the server device (not shown) and identifies the expected required time of arrival on each road based on the statistical information. Thus, the control unit 14 can calculate, as the value of the reference indicator, the required time of arrival at the destination in the case where an arbitrary point is set as the destination. If the indicator "traffic cost" is set as the reference indicator, for example, the control unit 14 identifies the average hour speed of the target vehicle expected on each road based on the above-described statistical information and then identifies the expected energy cost on each road based on the identified average hour speed. If the indicator "travelling distance" is set as the reference indicator, the control unit 14 calculates the value of the reference indicator to the destination with reference to the map DB 4 in the same manner as in the above-described embodiment.

In this modification, the mobile terminal 1 may be a terminal device such as a smartphone and a personal computer, or may be replaced with a server device which supplies information regarding a spot to the terminal device.

### (Sixth Modification)

Upon arriving at a spot set as the destination, the control unit 14 uses the spot as the designation spot to search for alternative spots and display information regarding the alternative spots.

In this instance, the control unit 14 performs processes (such as calculation of the first reference indicator value and identification of the alternative search area) at step S103 to step S107 in FIG. 7 by using the place of the target vehicle at the time when the destination is set. Upon detecting the arrival of the target vehicle at the destination, the control unit 14 displays information related to the alternative spots as shown in FIGS. 4 to 6.

According to this modification, it is possible to present information as a reference for the next and subsequent settings of the designation to the user. Further, in comparison with the case in which alternative spots are presented at the time of destination setting, the user who has already determined the destination can smoothly perform the destination setting without receiving presentation of the alternative spots.

### (Seventh Modification)

Upon determining that there is a spot (also referred to as "accustomed spot") where the target vehicle has visited at a frequency equal to or more than a predetermined degree, the control unit 14 uses the accustomed spot as the designated spot to perform search and presentation of the alternative spots.

In this case, for example, history information regarding deemed spots (e.g., set as the destination) which the user has ever visited is stored in the storage unit 12 or the like. Then, if the control unit 14 detects the history, regarding the spot set as the destination, which indicates a predetermined number or more of settings of the spot as the destination with reference to the history information of the spot, the control unit 14 determines that the spot set as the destination is an accustomed spot. In this instance, the control unit 14 regards the accustomed spot as the designated spot and executes the processes at step S103 to step S107 in FIG. 7. The control unit 14 may determine whether or not the spot set as the destination is an accustomed spot once the destination is newly set.

According to this modification, the control unit 14 can present alternative spots to the user while assuming a possibility that the user is tired of the accustomed spot and present an alternative spot to the user.

### (Eighth Modification)

The control unit 14 may search the alternative search area for alternative spots which are equivalent or similar in attribute to the designated spot and equivalent or superior in review to the designated spot. According to this modification, the control unit 14 can present alternative spots which are equivalent or superior, in terms of reviews, to the designated spot to the user.

As described above, the mobile terminal 1 or the server device 6 includes a specification unit, a search unit, and a presentation control unit. The specification unit specifies a first reference indicator value based on at least one of a required time of arrival at a designated spot from a reference point, a travelling distance from the reference point to the designated spot, and/or a traffic cost from the reference point to the designated spot. Then, the search unit searches for an alternative spot which has a same or similar attribute as or to the designated spot and a value of a reference indicator is equal or superior to the first reference indicator value, wherein the reference indicator is based on at least one of the required time of arrival, the travelling distance, and/or the traffic cost from the reference point. The presentation control unit causes a presentation unit to present the searched alternative spot. This configuration can allow to notify the user of the existence of the alternative spot having a same or good condition as the designated spot.

Further, as described above, the mobile terminal 1 or the server device 6 includes an acquisition unit, a determination unit, and a display control unit. The acquisition unit acquires a designated spot. The determination unit determines an alternative spot which is equivalent or similar in attribute to the designated spot. The display control unit cause the display unit 16 to display a map with indication of an isogram of an indicator, the designated spot, and/or the alternative spot, wherein the indicator is based on at least one of a required time of arrival, a travelling direction, and/or a traffic cost on an assumption that a reference point is set as a point of departure. This allows for visualization of rough indication of the employed indicator on the map together with the positions of the designation and alternative spot.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

### DESCRIPTION OF REFERENCE NUMERALS

- 1, 1A: Mobile terminal
- 3: Communication network
- 4: Map DB
- 5: Spot information DB
- 6: Server device
- 11, 61: Communication unit
- 12, 62: Storage unit
- 13: Input unit
- 14, 64: Control unit
- 15: Sensor group
- 16: Display unit
- 17: Sound output unit

## Claims

1. An information processing device comprising:
an acquisition unit configured to acquire a first spot;
a determination unit configured to determine a second spot which is equivalent or similar in attribute to the first spot; and
a display control unit configured to display, on a display device, a map with an indication of
an isogram of an indicator based on at least one of a required time of arrival, a travelling distance, and/or a traffic cost on an assumption that a point of departure is set as a reference point,
the first spot, and
the second spot.

2. The information processing device according to claim 1,
wherein the determination unit is configured to determine the second spot based on at least one of indicators which are the required time of arrival, the travelling distance, and the traffic cost from the reference point, and
wherein the display control unit is configured to display, on the display unit, the isogram based on an indicator other than the at least one indicator.

3. The information processing device according to claim 1,
wherein the isogram includes plural lines corresponding to plural values of the indicator, and
wherein the display control unit is configured to switch displaying each of the plural lines in order.

4. The information processing device according to any one of claims 1 to 3,
wherein the display control unit is configured to display the isogram corresponding to at least two indicators selected from the required time of arrival, the travelling distance, and the traffic cost, and
wherein the display control unit is configured to simultaneously display the isogram corresponding to the at least two indicators in a state where the at least two indicators are identifiable, respectively.

5. The information processing device according to any one of claims 1 to 3,
wherein the display control unit is configured to display the isogram corresponding to at least two indicators selected from the required time of arrival, the travelling distance, and the traffic cost, and
wherein the display control unit is configured to switch displaying the isogram corresponding to the at least two indicators in order.

6. The information processing device according to any one of claims 1 to 3, further comprising
a designation unit configured to receive an input for designating at least one of the required time of arrival, the travelling distance, and/or the traffic cost as the indicator used for displaying the isogram.

7. The information processing device according to any one of claims 1 to 3,
wherein the display control unit is configured to display information on respective reviews of the first spot and the second spot on the map.

8. A control method executed by a computer, comprising:
an acquisition process to acquire a first spot;
a determination process to determine a second spot which is equivalent or similar in attribute to the first spot; and
a display control process to display, on a display device, a map with an indication of
an isogram of an indicator based on at least one of a required time of arrival, a travelling distance, and/or a traffic cost on an assumption that a point of departure is set as a reference point,
the first spot, and
the second spot.

9. A program causing a computer to function as:
an acquisition unit configured to acquire a first spot;
a determination unit configured to determine a second spot which is equivalent or similar in attribute to the first spot; and
a display control unit configured to display, on a display device, a map with an indication of
an isogram of an indicator based on at least one of a required time of arrival, a travelling distance, and/or a traffic cost on an assumption that a point of departure is set as a reference point,
the first spot, and
the second spot.

10. A storage medium storing the program according to claim 9.
